# EUROPÄISCHE PATENTSCHRIFT

(11) **EP 1 052 169 B1**
(45) Veröffentlichungstag und Bekanntmachung des Hinweises auf die Patenterteilung: **14.04.2004**
(21) Anmeldenummer: 00109111.5
(22) Anmeldetag: 04.05.2000
(51) Int. Cl.: B64C 1/00, B64C 1/18, B64C 27/04

(54) **Unterbodenstruktur einer Rumpfzelle eines Luftfahrzeuges**
Aircraft fuselage floor structure
Structure de plancher pour fuselage d'aéronef

(30) Priorität: 14.05.1999 DE 19922295
(43) Veröffentlichungstag der Anmeldung: 15.11.2000
(73) Patentinhaber: Eurocopter Deutschland GmbH, 86609 Donauwörth (DE)
(72) Erfinder: Bansemir, Horst, 81825 München (DE)
(74) Vertreter: Baum, Wolfgang, Dipl.-Ing.

(56) Entgegenhaltungen:
- DE-A- 3 744 349
- DE-A- 4 313 592

## Beschreibung

Die Erfindung betrifft eine Unterbodenstruktur einer Rumpfzelle eines Luftfahrzeuges, insbesondere eines Hubschraubers, wobei die Unterbodenstruktur mit dem Boden und der äußeren Rumpfschale verbunden ist, bestehend aus miteinander verbundenen Längs- und Querträgem, wobei Strukturelemente und Aussteifungen an den Trägern angeordnet sind.

Der Luftfahrzeugbau widmet der Sicherheitsgestaltung einer Rumpfzelle für den Fall des Aufpralls mit ihrer unteren Rumpffläche entsprechende Aufmerksamkeit. Im dazugehörigen Sicherheitskonzept spielt die Unterbodenstruktur innerhalb einer Rumpfzelle eine wichtige Rolle. Die Unterbodenstruktur ist mit dem Boden, der mindestens aus einer Bodenplatte besteht und der äußeren Rumpfschale verbunden. Auf der Bodenplatte sind Aufbauten wie beispielsweise Sitze angeordnet. Beim Aufprall einer Rumpfzelle mit ihrer unteren Rumpffläche soll die Unterbodenstruktur einen wesentlichen Teil der kinetischen Energie des Aufpralls absorbieren, so daß der Schutz von Piloten und Passagieren verbessert wird. Da innerhalb der Unterbodenstruktur oftmals Tankgefäße angeordnet sind, müssen diese beim Aufprall die Möglichkeit zum bevorzugt seitlichen Entweichen haben, wobei die Unterbodenstruktur das Tankgefäß möglichst nicht verletzen sollte. Die untere Verkleidung (äußere Rumpfschale) der Rumpfzelle sollte möglichst ohne Bruch die Aufprallenergie an die Unterbodenstruktur weitergeben.
Die im Stand der Technik bekannte Unterbodenstruktur geht von der Annahme aus, daß der Aufprall für die Unterbodenstruktur eine überwiegend axiale Belastung darstellt, also einem vertikalen Aufprall entspricht.
Es ist deshalb im Stand der Technik bekannt, daß das säulenförmige Strukturelement beispielsweise eine Kreiszylinderschale aus Faserverbund-Werkstoff im Fall eines solchen Aufpralls das beste Kraftspitzenverhältnis bei zugleich höchster spezifischer Energieaufnahme besitzt. Aufgrund dieses Sachverhaltes finden häufig säulenförmige Strukturelemente in der Unterbodenstruktur Verwendung. Die Säulenform umfaßt den kreisförmigen Querschnitt aber auch den polyederförmigen. Es sind Faserverbund- oder Metallbauweisen üblich, wobei säulenförmige Strukturelemente in einem Träger integriert sind und mehrere, parallel positionierte Träger die Unterbodenstruktur bilden. Da die Säulen bzw. Zylinder sehr empfindlich sind gegenüber nicht axialer Beanspruchung, benötigen sie zusätzlich sogenannte Trigger-Konzepte, daß entspricht definierten Sollbruchstellen, um die beim Aufprall auftretende Kraftspitze zu reduzieren und eine kontrollierte Bruchmechanik (Bruchrichtung) zu erzielen. Eine kontrollierte Bruchmechanik läßt vorhersehen, wie und wann sich der Körper bei Einwirkung der Last verformt. Das Aufprallverhalten einer Unterbodenstruktur wird maßgeblich vom Absorptionsvermögen und der kontrollierten Bruchmechanik bestimmt.
Die [1] DE 37 44 349 A1, Figur 7 beschreibt den Boden eines Hubschraubers, in welchen gewellte, plattenförmige Strukturelemente angeordnet sind. Die Enden der dortigen Strukturelemente sind in einem Rahmen eingespannt, so daß sie bei einer vertikalen Druckbeaufschlagung nicht wegkanten können. Bei Verwendung von zylinderförmigen Verbundkörpern in einem solchen Rahmen wäre eine Sandwich-Bauweise mit zusätzlichen Deckplatten und zusätzlichen Positionierungs- und Verbindungselementen für die Strukturelemente erforderlich. Das ist nicht sehr praktikabel. Die Einbindung der Strukturelemente in einen Rahmen macht den Fertigungsaufwand der Unterbodenstruktur sehr aufwendig und führt zu einer deutlichen Gewichtszunahme. Anzustreben ist im Luftfahrzeugbau jedoch eine Leichtbauweise der Unterbodenstruktur.

Die Lösung nach
[2] C.M. Kindervater
   Crash Resistant Composite Airframe Structures: Design
   Concepts and Experimental Evaluation
   German Aerospace Research Establishment (DLR)
   Institut of Structures and Design, Pfaffenwaldring 38-40
   70569 Stuttgart, Germany
   DGLR Tagung Faserverbundwerkstoffe und -bauweisen in der Luft- und Raumfahrt",
   Daimler-Benz Aerospace, Ottobrunn, 27. und 28.11.1996
verwendet Spanten zur Ausbildung einer Unterbodenstruktur. Die Enden der Spante sind als Y-förmig ausgebildete Faserverbundkörper ausgebildet. Die Spanten sind kreuzförmig angeordnet, wobei in den Kreuzungspunkten zwei Y-förmig ausgebildete Enden zusammengefügt werden und einen säulenförmigen Tetraeder bilden. Dieser gerade, säulenförmige Tetraeder dient als Strukturelement zur Energieabsorbtion beim Aufprall. Gegenüber der vorhergehenden Lösung [1] besteht der Vorteil für [2], daß keine zusätzlichen Positionierungs- und Halteelemente für das Strukturelement erforderlich werden. Die Spanten selbst besitzen Aussteifungen.

Die in [2] gezeigte Unterbodenstruktur hat jedoch den Nachteil, daß energieabsorbierende Strukturelemente nur in den Kreuzungspunkten der Spante gebildet sind. Damit ist der Einsatz energieabsorbierender Strukturelemente stark begrenzt.
Solche säulenförmigen Strukturelemente, ob zylindrisch oder als Polyeder, sind empfindlich gegenüber wirkenden Seitenlasten.

Jedoch die Mehrzahl der Aufprallereignisse haben nicht nur axiale Lasten, sondern zugleich Seitenlasten zur Folge. Der gegenwärtige Stand der Technik berücksichtigt dies unzureichend. Die verwendeten Strukturelemente sind uneffektiv beim Auftreten von Seitenlasten.

Aufgabe der Erfindung ist es, bei Luftfahrzeugen das Aufprallverhalten der in eine Rumpfzelle eingefügten Unterbodenstruktur unter Berücksichtigung einer Leichtbauweise weiter zu verbessern. Die Aufgabe wird gelöst nach den kennzeichnenden Merkmalen des Anspruch 1.

Längsträger und Querträger der Unterbodenstruktur sind mit einem trapezförmigen Querschnitt ausgestattet. Das ist erreicht, wenn die einer Rückenseite gegenüberliegende parallele, größere Standseite des trapezförmigen Querschnitts offen ist.
Vorteilhafterweise können Längsträger und Querträger zu einem Gitterrost angeordnet werden. Durch die Verbindung zweier Träger ergibt sich im Kreuzungspunkt der Träger wiederum eine vorteilhafte Konusstruktur. Eine Dimensionierung der Träger kann mit Hilfe von Wandstärke und einem bei Faserverbund-Bauweise bekannten Lagenaufbau erfolgen. Die Schulterseite eines Trägers können mit einem optimalen Flankenwinkel je nach Lastrichtung und Lastart von 10° bis 25° ausgestattet sein. Die schräg gestellten Schulterseiten eines Trägers sind ausgesteift.
In die trapezförmigen Längsträger und Querträger sind Konuse mit Rechteckquerschnitten d.h. Pyramidenstümpfe einfügbar. Das gesamte Gitterrost besteht somit aus eingefügten Konusen mit rechteckigem Querschnitt. Die Verbindungen zwischen den trapezförmigen Trägern und den Konusen erfolgt vorteilhafterweise durch Überlappungsklebungen der Falze. Andere Verbindungsarten sind jedoch auch machbar. Die Pyramidenstümpfe fügen sich formschlüssig in die Kontur eines Trägers ein. Träger und Pyramidenstumpf besitzen vorteilhafterweise einen Flankenwinkel von 10° bis 25°. Die offene Standseite eines Trägers kann beispielsweise nach dem Einfügen der Konusse mit einer zu fixierenden Platte abgedeckt werden.
Die optimale Unterbodenstruktur ergibt sich aus Längs- und Querträgern und den darin eingefügten Konussen. Die erfindungsgemäße Unterbodenstruktur erbringt den Vorteil, daß sowohl Axiallasten als auch Seitenlasten beim Aufprall sicher aufgenommen werden können. Bisherige Trigger-Einrichtungen sind nicht notwendig. Da die Bruchrichtung der erfindungsgemäßen Unterbodenstruktur nach innen (Inneres des Trapezquerschnittes) vorgegeben ist, verbessert sich das Sicherheitsverhalten, da ein Eindringen von Bruchmaterial in zwischen Unterbodenstruktur eingebettete Tankgefäße kaum möglich ist. Die Unterbodenstruktur besitzt eine sehr gute Energieaufnahme bei geringem Eigengewicht, so daß Forderungen nach einer Leichtbauweise einzuhalten sind. Ebenso können alle nicht durch Aufprall bedingten Kräfte durch das Gitterrost sicher übertragen werden.

Ein Ausführungsbeispiel zur Erfindung ist in nachfolgenden Zeichnungen dargestellt und im Folgenden näher beschrieben. Es zeigen
- **Fig. 1**: Ausschnitt gitterrostartig zusammengefügter Längsträger und Querträger mit trapezförmigem Querschnitt
- **Fig. 1a**: Darstellung eines Kreuzungspunktes zwischen Längs- und Querträger mit Schnitt A-A und Schnitt B-B
- **Fig. 2**: Draufsicht und Schnitt C-C durch einen rechteckigen Pyramidenstumpf
- **Fig. 3**: Draufsicht auf Längs- und Querträger mit Kreuzungspunkt und eingesetzten, rechteckförmigen Pyramidenstümpfen.
- **Fig. 4**: Abschnitt eines trapezförmigen Trägers mit einzufügendem Konus (Pyramidenstumpf) als Strukturelement.

Der Rumpf eines Luftfahrzeuges besteht aus mindestens einer Rumpfzelle. Sind mehrere solche Rumpfzellen erforderlich, werden diese modulartig hintereinander verbunden. Das Skelettgerüst einer Rumpfzelle wird von einer Außenhaut, in der Regel von Schalensegmenten, umgeben. Dabei ist die Rumpfzelle auch so gestaltet, daß sie Nutzlasten (Besatzung, Passagiere, Fracht) aufnehmen kann. Dazu werden Böden erforderlich, die von der Rumpfzelle getragen werden. Die Unterbodenstruktur ist unmittelbar mit einem Boden verbunden. Sie verbessert nicht nur die Tragfähigkeit des Bodens, sondern verbessert auch die Stabilität und das Bruchverhalten bei Aufprall des Rumpfes aus geringer Flughöhe. Das Sicherheitsverhalten einer Unterbodenstruktur beim Aufprall wird maßgeblich bestimmt vom Vermögen, Anteile von der kinetischen Aufprallenergie wirkungsvoll zu absorbieren und eine definierte Bruchrichtung einzuhalten.

Nach der Erfindung sind Längs- und Querträger mit einem trapezförmigen Querschnitt ausgestattet. Vorteilhafterweise werden Längsträger und dazu quer ausgerichtete Querträger zu einer Unterbodenstruktur angeordnet. In den Kreuzungspunkten sind Längsund Querträger miteinander verbunden.
In diesem Fall wird der trapezförmige Querschnitt eines Trägers erreicht, indem alle Seiten des Trapezes durch den Träger gebildet werden. Der Träger ist dabei hohl.

Die Vielzahl der miteinander verbundenen Längs- und Querträger sind zu einem Gitterrost zusammengefügt.

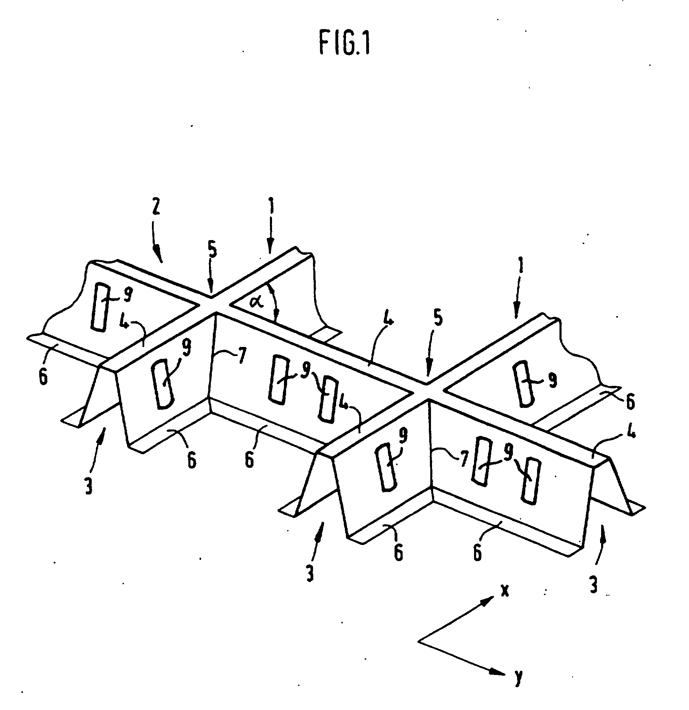

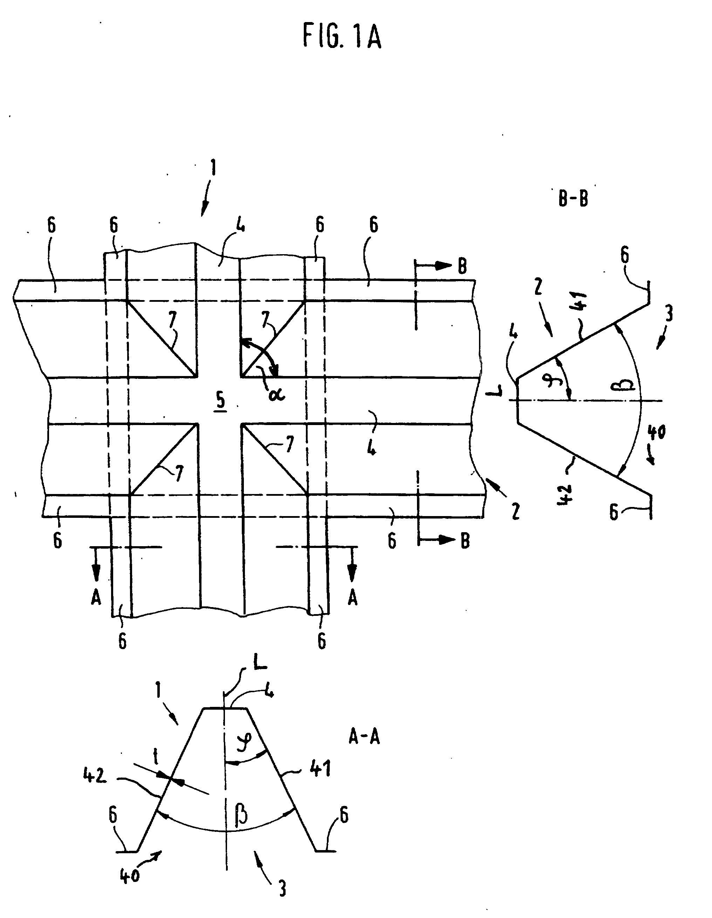

Eine wirtschaftlich effiziente Variante bei der Gestaltung des trapezförmigen Querschnitts des Trägers ist entsprechend **Figur 1** erreicht, wenn die der Rückenseite 4 gegenüberliegende parallele, größere Standseite offen ist, d.h. nicht vorhanden ist. Die drei Seiten werden gebildet durch die Rückenseite 4 und die beiden Schulterseiten 41, 42, wobei sich jede Schulterseite in einem Winkel abstützt. Es entsteht somit ein Profilträger, dessen drei Seiten trapezförmig angeordnet sind. Sie bilden den trapezförmigen Querschnitt 3. Mit der Rückenseite 4 wird die Unterbodenstruktur am Boden befestigt (z.B. durch Verklebung) und mit den äußeren Verschalungen der Rumpfzelle verbunden. Der Boden besteht mindestens aus einer Bodenplatte. Jeder Träger kann mit einem Falz 6 ausgerüstet sein. Die beiden schrägen Schulterseiten sind ausgesteift, z.B. durch wellenförmige Prägung oder durch beabstandete Aussteifungen im Material. Eine Aussteifung der Schulterseite kann jedoch auch erreicht werden indem die Schulterseite in Sandwich-Bauweise gestaltet ist. Fig. 1 zeigt die Aussteifung der Schulterseite im Material. Die Aussteifung entspricht dort einer Ausbuchtung des Materials.
Die Längsträger 1 und die Querträger 2 sind gitterrostartig angeordnet und bilden Kreuzungspunkte 5. Fig. 1 zeigt einen Ausschnitt aus dem Gitterrost. Längs- und Querträger bilden an ihren gemeinsamen Berührungsstellen eine Naht 7.
Vorteilhafterweise ist der Kreuzungswinkel α im wesentlichen 90°. Es wird damit eine gleichmäßige Gestalt des Kreuzungspunktes 5 erreicht. Eine solche Gestaltung entspricht einer optimalen Kräfteaufnahme und ermöglicht eine kostengünstige Fertigung. Weniger vorteilhaft, aber anwendbar, wäre auch eine Anordnung der Längs- und Querträger zu einem sogenannten Scherengitter. Die Kreuzungswinkel am dortigen Kreuzungspunkt wären dann unterschiedlich.
**Figur 1a** zeigt eine Draufsicht eines solchen Kreuzungspunktes 5, gebildet durch Längsträger 1 und Querträger 2. Die Schnitte A-A bzw. B-B verdeutlichen den vorteilhaften trapezförmigen Querschnitt 3 eines Längs- und Querträgers. Wie die Schnittdarstellungen A-A und B-B zeigen, wird der trapezförmige Querschnitt gebildet, indem die einer Rückenseite 4 gegenüberliegende, größere Standseite 40 offen ist, d.h. nicht vorhanden ist. Der Flankenwinkel ϕ repräsentiert die Steilheit einer schrägen Schulterseite 41,42 des Trapezes gegenüber der Lotrechten L. Sinnvollerweise sind die beiden Flankenwinkel ϕᵢ gleich groß. Der Öffnungswinkel β beschreibt den Winkel, den die beiden schrägen Schulterseiten 41,42 des trapezförmigen Querschnitts einschließen. Er summiert sich aus den beiden Flankenwinkeln ϕᵢ. Die Träger 1,2 haben in den Enden der schrägen Schulterwände, in Ebene der Standseite 40, Falze 6 angeordnet, die vom trapezförmigen Querschnitt wegführen. Diese Falze 6 dienen zur Befestigung für Strukturelemente. Eine Dimensionierung eines Trägers erfolgt durch die geometrischen Abmessungen seiner drei Trapezseiten, den Flankenwinkel ϕ , die Wandstärke t und das Material, wobei vorteilhaft Faserverbund-Werkstoff verwendet wird. Andere Werkstoffe sind je nach Verwendungszweck auch einsetzbar. Bei Faserverbund-Bauweise können die Wände des Längs- bzw. Querträgers vorteilhaft im Lagenaufbau gestaltet sein. Die Flankenwinkel ϕᵢ vom Längs- und Querträger können auch unterschiedlich sein.

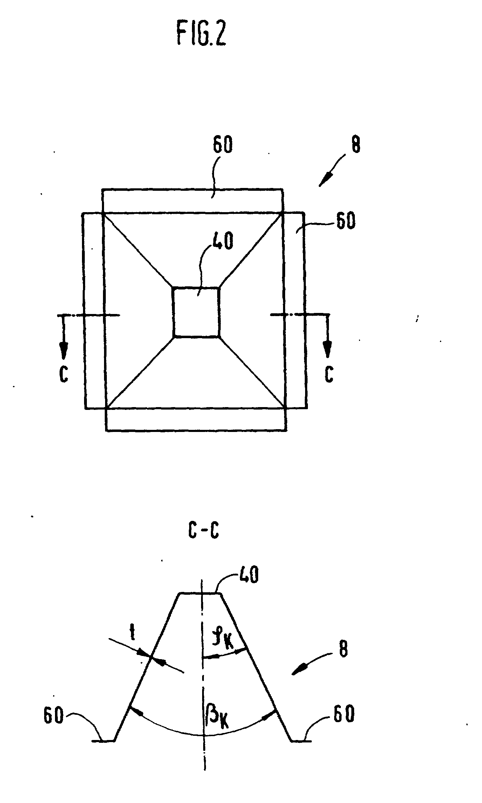

Der trapezförmige Querschnitt eines Längs- bzw. Querträgers ergibt für die Unterbodenstruktur den Vorteil, daß sowohl Axiallasten als auch Seitenlasten in Folge eines Aufpralls optimal aufgenommen werden können. Es ist nicht notwendig zusätzliche Trigger-Einrichtungen zu schaffen. Dieses Verhalten der Träger beim Aufprall kann weiter verbessert werden, wenn Strukturelemente in Form eines Pyramidenstumpfes 8 in den Träger 1,2 eingefügt und mit diesem verbunden werden. **Figur 2** zeigt die Draufsicht eines Pyramidenstumpfes 8. Darunter ist der zugehörige Schnitt C-C dargestellt. Der Pyramidenstumpf 8, auch Konus genannt, wird dabei so eingefügt, daß zwei der schrägen, einander gegenüberliegenden Pyramidenwände formschlüssig in Kontakt mit den schrägen Schulterwänden eines Trägers sind. Der Pyramidenstumpf 8 ist folglich mit seiner Deckfläche 40 bis auf Anschlag in den Öffnungswinkel β des Trägers eingefügt. Der Öffnungswinkel β_{K} des Konus sollte vorteilhafterweise im wesentlichen dem Öffnungswinkel β des Trägers entsprechen. Die äußere Kontur des Pyramidenstumpfes 8 paßt sich somit der Kontur des Trägers 1,2 an. Da der Pyramidenstumpf 8 ebenfalls mit Falzen 60 ausgerüstet ist, kommen diese in Kontakt mit den Falzen 6 des Trägers 1,2. Die Verbindung kann mittels Kleben (Überlappungsklebung) oder anderen Verbindungsarten hergestellt werden. Der Pyramidenstumpf 8 entspricht vorteilhafterweise einem Konus, dessen größere der beiden parallelen Flächen offen ist. Er ist somit hohl.
Der Pyramidenstumpf 8 zeigte sich als unempfindlich gegenüber Abweichungen aus der axialen Lastrichtung.
Mit dem Einfügen von Pyramidenstümpfen in Längs- und Querträger wird die Fähigkeit der Energieabsorption der Unterbodenstruktur deutlich erhöht. Die Dimensionierung über die Länge eines Trägers ist nicht eingeschränkt. Im Gegensatz zu anderen Unterbodenstrukturen ist der Pyramidenstumpf 8 ohne zusätzliche Positions- und Halteelemente in die aus Quer- und Längsträgern gebildete Unterbodenstruktur einfügbar. Der erfindungsgemäße Träger 1,2 mit trapezförmigem Querschnitt und eingefügtem Pyramidenstumpf 8 stellt eine sehr effektive Lösung dar, zwischen erhöhtem Absorptionsverhalten, der Gewährleistung einer definierten Bruchrichtung für sowohl Axialals auch Seitenlasten unter Gewährleistung einer Leichtbauweise für Luftfahrzeuge.

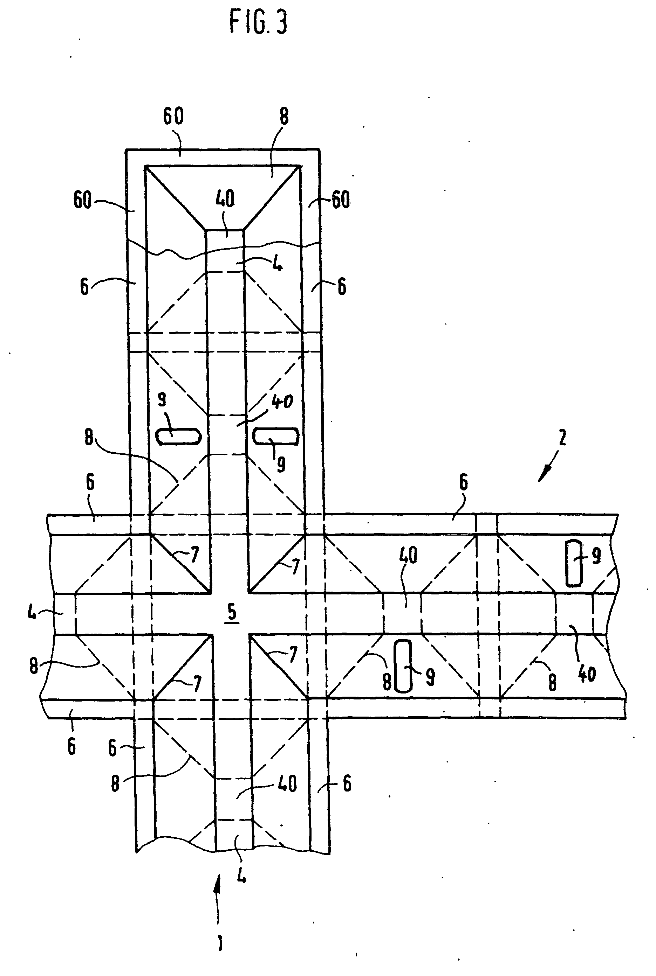

**Figur 3** zeigt in der Draufsicht einen Längsträger 1 und Querträger 2 mit eingefügten Pyramidenstümpfen 8. Diese Pyramidenstümpfe 8 sind in ihrer Anzahl wählbar. Eine vorteilhaft hohe Absorbtionsfähigkeit von kinetischer Energie wird erreicht, wenn ein Pyramidenstumpf 8 neben dem anderen angeordnet wird. Da der Kreuzungspunkt 5 zwischen Längs- und Querträger im wesentlichen ebenfalls einer Konusstruktur entspricht muß dort kein zusätzlicher Konus eingefügt werden.

Die gitterrostartige Anordnung der trapezförmigen Längs- und Querträger bildet die Unterbodenstruktur.Die Schulterseiten der Träger haben Aussteifungen 9 bzw. können alternativ in Sandwich-Bauweise gestaltet sein.Die Rückenseiten 4 (entspricht der kleineren Seite der beiden parallelen Seiten eines Trapezes) sind am Boden befestigt und der mit der äußeren Verschalung in Berührung kommende Rand der Unterbodenstruktur ist dort befestigt.
Bei einem solchen Einbau der Unterbodenstruktur ist die Bruchrichtung nach innen in das Trapez bzw. nach innen in den Kegelstumpf vorgegeben. Es wird damit erreicht, daß das Material des Unterbodens das dazwischenliegende Tankgefäß nicht beschädigt.
Alle nicht durch Aufprall bedingten Kräfte können ebenfalls durch das Gitterrost sicher übertragen werden. Der Unterboden besitzt eine sehr gute Energieaufnahme bei zugleich geringer Eigenlast. Er erfüllt damit die Anforderungen hinsichtlich einer Leichtbauweise.

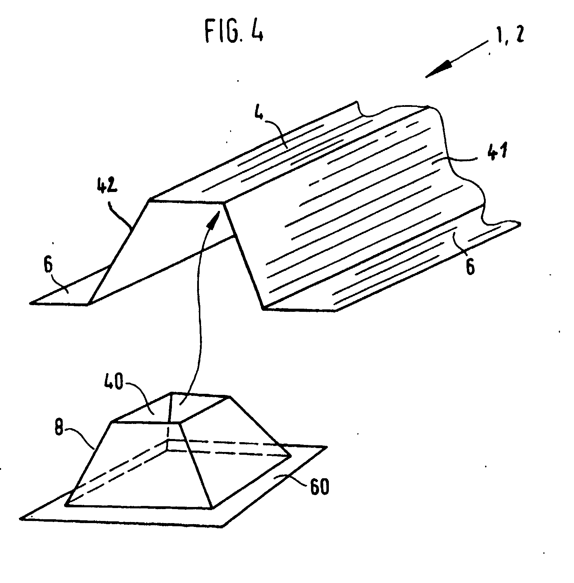

**Fig. 4** zeigt einen kurzen Abschnitt eines Trägers 1, 2 in den ein Konus, der Pyramidenstumpf 8, einzufügen ist.
Im eingefügten Zustand ist die Deckseite 40 des Pyramidenstumpfes 8 in Anschlag zur Trägerseite 4 des Trägers 1, 2. Die Deckseite 40 ist rechteckig. Da das trapezförmige Profil (Fig. 2, Schnitt C-C) des Pyramidenstumpfes 8 in seiner Dimensionierung im wesentlichen dem trapezförmigen Querschnitt (Fig. 1a, Schnitt A-A bzw. Schnitt B-B) des Trägers 1, 2 entspricht, ist der Pyramidenstumpf formschlüssig in den Träger 1, 2 eingefügt.
Dabei kommen die Längs zum Träger verlaufenden Falze 60 des Pyramidenstumpf 8 zur Deckung mit den Falzen 6 des Trägers. Eine Verbindung der Falze ist mittels Klebung sinnvoll.
In Längsrichtung des Trägers 1, 2 können weitere, benachbarte Pyramidenstümpfe 8 eingfügt werden.
Dabei können benachbarte Pyramidenstümpfe 8 mit den einander überlappenden Falzen 60 gegenseitig verbunden werden.

## Patentansprüche

1. Unterbodenstruktur einer Rumpfzelle eines Luftfahrzeuges, insbesondere eines Hubschraubers, wobei die Unterbodenstruktur mit dem Boden und der äußeren Rumpfschale verbunden ist, bestehend aus miteinander verbundenen Längs- und Querträgern, wobei Strukturelemente und Aussteifungen an den Trägern angeordnet sind, **dadurch gekennzeichnet, daß** Längsträger (1) und Querträger (2) mit trapezförmigem Querschnitt (3) gestaltet sind, wobei die einer Rückenseite (4) gegenüberliegende parallele, größere Standseite (40) des trapezförmigen Querschnitts (3) offen ist und zueinander nicht parallele Schulterseiten (41,42) ausgesteift sind.

2. Unterbodenstruktur nach Anspruch 1, **dadurch gekennzeichnet, daß** Längsträger (1) und Querträger (2) zu einem Gitterrost angeordnet sind, die Kreuzungspunkte (5) bilden.

3. Unterbodenstruktur nach einem der vorhergehenden Ansprüche, **dadurch gekennzeichnet, daß** zwischen nicht parallelen Schulterseiten des Trägers (1,2) Pyramidenstümpfe (8) als Strukturelemente eingesetzt sind.

4. Unterbodenstruktur nach Anspruch 3, **dadurch gekennzeichnet, daß** die Grundfläche des Pyramidenstumpfes (8) offen ist, wobei die schrägen Pyramidenwände in Ebene der Grundfläche des Pyramidenstumpfes Falze (60) besitzen.

5. Unterbodenstruktur nach Anspruch 3, **dadurch gekennzeichnet, daß** der Pyramidenstumpf (8) einen rechteckigen Querschnitt besitzt.

6. Unterbodenstruktur nach Anspruch 3, **dadurch gekennzeichnet, daß** der Pyramidenstumpf (8) einen Flankenwinkel (ϕ_{K}) von 10° bis 25° besitzt.

7. Unterbodenstruktur nach Anspruch 4, **dadurch gekennzeichnet, daß** die Falze (60) eines Pyramidenstumpfes (8) mit den Falzen (6) des Trägers (1,2) verbindbar sind.

8. Unterbodenstruktur nach einem der Ansprüche 1 bis 3, **dadurch gekennzeichnet, daß** die Standseite (40) mit einer Platte abdeckbar ist, die an Falzen fixierbar ist.

## Claims

1. Underfloor structure of a fuselage cell of an aircraft, in particular of a helicopter, wherein the underfloor structure is connected to the floor and the outer fuselage shell, comprising mutually connected longitudinal and transverse beams, wherein structural elements and reinforcements are disposed on the beams, **characterized in that** longitudinal beams (1) and transverse beams (2) are fashioned with a trapezoidal cross section (3), wherein the - in relation to a back side (4) - opposite parallel, larger standing side (40) of the trapezoidal cross section (3) is open and shoulder sides (41, 42), which are not parallel to one another, are reinforced.

2. Underfloor structure according to claim 1, **characterized in that** longitudinal beams (1) and transverse beams (2) are arranged into a grate, which form points of intersection (5).

3. Underfloor structure according to one of the preceding claims, **characterized in that** truncated pyramids (8) are inserted as structural elements between non-parallel shoulder sides of the beam (1, 2).

4. Underfloor structure according to claim 3, **characterized in that** the base of the truncated pyramid (8) is open, wherein the sloping pyramid walls in the plane of the base of the truncated pyramid have folds (60).

5. Underfloor structure according to claim 3, **characterized in that** the truncated pyramid (8) has a rectangular cross section.

6. Underfloor structure according to claim 3, **characterized in that** the truncated pyramid (8) has a flank angle (ϕ_{κ}) of 10° to 25°.

7. Underfloor structure according to claim 4, **characterized in that** the folds (60) of a truncated pyramid (8) are connectable to the folds (6) of the beam (1, 2).

8. Underfloor structure according to one of claims 1 to 3, **characterized in that** the standing side (40) is coverable by a plate, which is fixable to folds.

## Revendications

1. structure de plancher pour fuselage d'aéronef, notamment d'un hélicoptère, la structure de plancher étant reliée avec le sol et la coque de fuselage externe, constituée de supports longitudinaux et transversaux reliés les uns aux autres, des éléments structurels et raidissements ayant été disposés contre les supports, et **caractérisée en ce que** les supports longitudinaux (1) et les supports transversaux (2) présentent une section transversale trapézoïdale (3), la face fixe plus grande, parallèle et opposée à une face postérieure (4) de la section transversale trapézoïdale étant ouverte et des faces à épaulements (41, 42) non parallèles les uns aux autres ayant été raidies.

2. Structure de plancher selon la revendication 1, **caractérisée en ce que** des supports longitudinaux et (1) et des supports transversaux (2) ont été disposés pour former un caillebotis constitué par des points d'intersection.

3. Structure de plancher selon une des revendications précédentes, **caractérisée en ce que** des troncs de pyramides (8) ont été insérés comme éléments structuraux entre des faces à épaulements non parallèle du support (1, 2).

4. Structure de plancher selon la revendication 3, **caractérisée en ce que** la surface de base du tronc de pyramide (8) est ouverte, les parois obliques des pyramides présentant, au niveau de la surface de base du tronc de pyramide, des feuillures (60).

5. Structure de plancher selon la revendication 3, **caractérisée en ce que** le tronc de pyramide (8) possède une section transversale rectangulaire.

6. Structure de plancher selon la revendication 3, **caractérisée en ce que** le tronc de pyramide (8) possède un angle de flanc (ϕ_{κ}) allant de 10° à 25°.

7. Structure de plancher selon la revendication 4, **caractérisée en ce que** la feuillure (60) d'un tronc de pyramide (8) peut être reliée aux feuillures (6) du support (1, 2).

8. Structure de plancher selon une des revendications 1 à 3, **caractérisée en ce que** le côté fixe (40) peut être recouvert d'un panneau pouvant être fixé à des feuillures.
